# EUROPÄISCHE PATENTSCHRIFT

(11) **EP 1 967 714 B1**
(45) Veröffentlichungstag und Bekanntmachung des Hinweises auf die Patenterteilung: **29.05.2013**
(21) Anmeldenummer: 08003997.7
(22) Anmeldetag: 04.03.2008
(51) Int. Cl.: F01P 7/16, G05D 23/19

(54) **Kühlmittelregler und Verfahren zu dessen Herstellung**
Cooling agent regulator and method for its manufacture
Régulateur d'agent de refroidissement et son procédé de fabrication

(30) Priorität: 09.03.2007 DE 102007011673
(43) Veröffentlichungstag der Anmeldung: 10.09.2008
(73) Patentinhaber: Behr Thermot-tronik GmbH, 70806 Kornwestheim (DE); Bayerische Motoren Werke Aktiengesellschaft, 80809 München (DE)
(72) Erfinder: Lemberger, Heinz, 85774 Unterföhring (DE); Frunzetti, Barbu, 70806 Kornwestheim (DE); Richter, Wolfgang, 70806 Kornwestheim (DE)
(74) Vertreter: Riedel, Peter

(56) Entgegenhaltungen:
- EP-A1- 1 174 603
- EP-A1- 1 207 283
- EP-A2- 1 205 833
- DE-A1- 3 315 308
- DE-A1- 3 705 232
- GB-A- 2 297 143

## Beschreibung

Die Erfindung betrifft einen Kühlmittelregler, insbesondere für einen Kühlmittelkreislauf einer Brennkraftmaschine der im Oberbegriff des Anspruchs 1 angegebenen Gattung sowie ein Verfahren zur Herstellung eines solchen Kühlmittelreglers.

Kühlanlagen für eine Brennkraftmaschine, beispielsweise in einem Kraftfahrzeug, umfassen in der Regel einen Kühlmittelregler mit einem Thermostatventil, das ein in Abhängigkeit der Temperatur der Kühlflüssigkeit wirkendes Arbeitselement umfasst. Eine solche Kühlanlage mit Thermostatventil ist aus der DE 44 09 547 A1 bekannt. Dabei ist das Arbeitselement ein Dehnstoffelement, das mit einer zusätzlichen Heizeinrichtung versehen ist. Ein solcher Kühlmittelregler mit Thermostatventil regelt eine Strömung des Kühlmittels zwischen der Brennkraftmaschine und dem Kühler derart, dass während einer Warmlaufphase das von der Brennkraftmaschine kommende Kühlmittel im Wesentlichen unter Umgehung des Kühlers durch eine Kurzschlussöffnung oder Kurzschlussleitung zu der Brennkraftmaschine zurückströmt.

Ab einem bestimmten Temperaturniveau wird während einer Betriebsphase in einem Mischbetrieb das von der Brennkraftmaschine kommende Kühlmittel teilweise durch den Kühler und teilweise durch die Kurzschlussöffnung geleitet, wobei der letztgenannte Anteil der Brennkraftmaschine zugeführt wird. Oberhalb eines weiteren vorgegebenen Temperaturniveaus wird der gesamte Kühlmittelstrom durch den Kühler geleitet, um die Brennkraftmaschine ausreichend zu kühlen. Für die Steuerung der Brennkraftmaschine und auch zur Verbesserung der Kühlmittelregelung werden Temperatursensoren eingesetzt, die zum Erfassen einer Kenngröße eines Mediums, vorzugsweise der Temperatur des Kühlmittels, vorgesehen sind. Die Sensoren sind mit einem Kabel versehen, das zur Übertragung der ermittelten Daten bzw. der jeweiligen Messwerte an eine Verarbeitungseinheit wie beispielsweise ein Steuergerät oder ein Bordcomputer dient.

Aus der EP 1 174 693 A1 ist ein Kühlmittelregler für eine Brennkraftmaschine bekannt. Dieser Kühlmittelregler besteht aus einem in einem Gehäuse angeordneten Thermostatventil, das mindestens ein in Abhängigkeit eines Temperaturwertes von einem Arbeitselement beaufschlagbares Ventilschließglied, einen Temperatursensor sowie ein Heizelement für das Arbeitselement umfasst. An dem Gehäuse ist mindestens ein Stecker vorgesehen, an dem eine Stromzuführung für das Heizelement angeschlossen ist.

Die DE 37 05 232 A1 beschreibt ein Verfahren zur Temperaturregelung des Kühlmittels von Brennkraftmaschinen. Die Brennkraftmaschine weist in der Vorlaufleitung und Bypassleitung ein Regelventil auf, das in Abhängigkeit zumindest von der Kühlmitteltemperatur mittels eines Stellmotors betätigbar ist. Dieser ist getrieblich mit der Ventilstange des Regelventils verbunden. Der Stellmotor wird in Abhängigkeit von einem Sensor gesteuert, der die Kühlmitteltemperatur in einer mit der Maschine verbundenen Leitung misst.

Der vorliegenden Erfindung liegt die Aufgabe zu Grunde, einen Kühlmittelregler der eingangs genannten Gattung zu schaffen, der sicher bezüglich seiner Funktion und einfach bezüglich seiner Herstellung ist.

Diese Aufgabe wird bezüglich des Kühlmittelreglers durch die Merkmale des Anspruchs 1 und bezüglich des Verfahrens zu dessen Herstellung durch die Merkmale des Anspruchs 11 gelöst.

Gemäß der Erfindung ist vorgesehen, dass an dem Gehäuse mindestens ein Stecker vorhanden ist, von dem aus Verbindungsleitungen zu dem Temperatursensor führen und eine Stromzuführung für das Heizelement vorhanden ist. Dabei sind der Stecker, der Temperatursensor, die Verbindungsleitungen zwischen diesen und die Stromzuführung für das Heizelement als vorgefertigte Baugruppe ausgeführt und diese Baugruppe ist in das Gehäuse integriert. Vor der Integration in das Gehäuse kann die Baugruppe auf ihre Funktion hin überprüft werden, wodurch die Qualitätssicherung vereinfacht ist. Dadurch, dass bei der Montage des Kühlmittelreglers bzw. beim Anschluss an einen Kühlmittelkreislauf bereits alle elektrischen Anschlüsse und der Temperatursensor integriert sind, ist der Einbau einfacher.

Gemäß einer bevorzugten Weiterbildung des Erfindungsgegenstandes umfasst der Temperatursensor eine Sensorpille und ein Metallrohr, wobei die Sensorpille vorzugsweise am Ende des Metallrohres in diesem wärmeleitend angeordnet ist. Auf Grund des Metallrohres wird die Temperatur des Kühlmittels gut auf die Sensorpille übertragen, so dass sehr rasch der aktuelle Wert der Kühlmitteltemperatur von der Sensorpille erfasst und ein entsprechendes Signal weitergegeben werden kann. Vorzugsweise ist der Temperatursensor an bzw. in einer Gehäusewand gehalten und ragt aus dieser in einen Kühlmittelkanal, wobei er dort von dem Kühlmittel umströmt wird.

Gemäß einer alternativen Ausgestaltung umfasst die Baugruppe auch das Heizelement, das mit der Stromzuführung verbunden ist. Auf diese Weise entfällt eine nachträgliche Montage des Heizelementes und Verbinden mit der Stromzuführung. Es kann jedoch auch an einem Ende der Stromzuführung ein weiterer Stecker angeordnet sein, der ebenfalls Bestandteil der Gruppe ist, und wobei dieser Stecker zur Kontaktierung mit dem später einzusetzenden Heizelement vorgesehen ist. Die Verbindungsleitungen und die Stromzuführung der Baugruppe können aus flexiblen Drähten bestehen, es ist jedoch ebenso möglich, starre Drähte, Stromschienen oder Bänder zu benutzen. Sofern eine ausreichende Flexibilität der Leitungen gegeben ist, können die die Baugruppe bildenden Teile beim Einlegen in die Spritzgussform zur Herstellung des Kunststoffgehäuses noch relativ zueinander bewegt werden, so dass sie auf jeden Fall an die Form angepasst werden können. Um das Einlegen in die Spritzgussform zur Herstellung des Gehäuses zu erleichtern, ist es zweckmäßig, dass die Baugruppe als formstabiles Bauteil aus Kunststoff ausgeführt ist, an dem der bzw. die Stecker angeformt sind.

Gemäß einer Ausführungsvariante sind die Verbindungsleitungen und die Stromzuführung an separaten Kontakten im Stecker angeschlossen. Um außerhalb des Kühlmittelreglers die Anzahl der Anschlussleitungen zu reduzieren, ist es zweckmäßig, diese Leitungen sowohl für die Stromversorgung des Arbeitselementes als auch für die Übermittlung der Sensorsignale zu benutzen. In diesem Fall sind die Verbindungsleitungen und die Stromzuführung an gemeinsamen Kontakten im Stecker angeschlossen.

Ausführungsbeispiele des erfindungsgemäßen Kühlmittelreglers sind nachstehend anhand der Zeichnung näher erläutert. In der Zeichnung zeigt:
Fig. 1 einen Längsschnitt durch eine erste Ausführungsform eines Kühlmittelreglers,
Fig. 2 eine Ausführungsvariante zu Fig. 1,
Fig. 3 eine als formstabiles Bauteil ausgeführte Baugruppe mit Stecker und Temperatursensor,
Fig. 4 eine Ansicht in Richtung des Pfeils IV in Fig. 3,
Fig. 5 einen Schnitt entlang der Linie V-V in Fig. 4,
Fig. 6 die Darstellung eines im Gehäuse des Kühlmittelreglers gehaltenen und aus diesem herausragenden Temperatursensors.

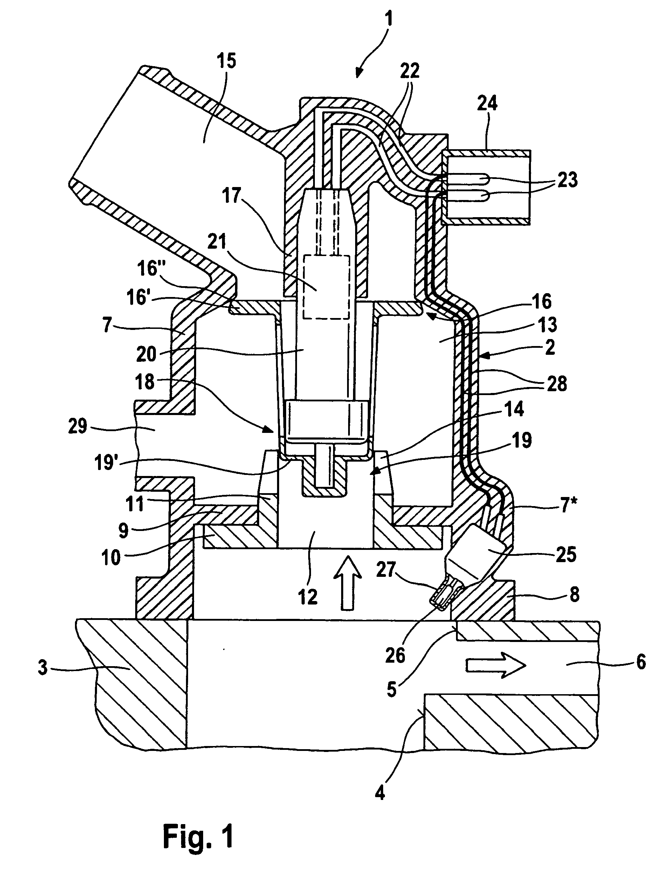

In Fig. 1 ist ein Kühlmittelregler 1 dargestellt, der ein Thermostatventil 2 umfasst, das beispielsweise an einem Motorgehäuse 3 unmittelbar befestigt ist. Auf diese Weise kann eine außerhalb der Brennkraftmaschine verlaufende Kurzschlussleitung entfallen. In dem Motorgehäuse 3 ist ein Kühlmittelkanal 4 angeordnet mit einer Anschlussöffnung 5, über die der Kühlmittelkanal 4 von der Außenseite des Motorgehäuses 3 zugänglich ist. Im Bereich dieser Anschlussöffnung 5 ist eine Kühlmittelbohrung 6 vorgesehen, an die eine Vorlaufleitung des Kühlmittelkreislaufs angeschlossen wird.

Das Thermostatventil 2 umfasst ein Gehäuse 7, das an seinem unteren Ende mit einem Flansch 8 versehen ist. Dieser Flansch 8 liegt an der Außenseite des Motorgehäuses 3 an und überdeckt somit die Anschlussöffnung 5. Oberhalb des Flansches 8 befindet sich in dem Gehäuse 7 ein nach innen gerichteter radialer Bund 9, an dem ein Flansch 10 mit einem axialen Hülsenabschnitt 11 befestigt ist, der konzentrisch zur Längsachse des Gehäuses 7 ausgerichtet ist. In diesem Hülsenabschnitt 11 befindet sich eine zentrische Kurzschlussöffnung 12, die in eine in dem Gehäuse 7 gebildete Ventilkammer 13 führt. An seinem in die Ventilkammer 13 ragenden Ende ist der Hülsenabschnitt 11 mit radialen Öffnungen 14 versehen.

Im oberen Bereich des Gehäuses 7 ist ein Rücklaufanschluss 15 vorgesehen, der über ein Hauptventil 16 mit der Ventilkammer 13 verbindbar ist. Konzentrisch zur Längsachse des Gehäuses 7 ragt ein Stutzen 17 in Richtung zur Ventilkammer 13, wobei an dem Stutzen 17 ein Thermostateinsatz 18 befestigt ist, der sowohl das Hauptventil 16 als auch ein Kurzschlussventil 19 umfasst.

In dem Thermostateinsatz 18 befindet sich außerdem ein Arbeitselement 20, das vorzugsweise ein Dehnstoffelement ist. Dieses Arbeitselement 20 ist in dem Stutzen 17 aufgenommen und ragt in die Ventilkammer 13, so dass es von dem dort durchströmten Kühlmittel umspült wird. In dem Bereich des unteren Endes des Stutzens 17 befindet sich das Hauptventil 16, das aus einem Hauptventilteller 16' als Ventilschließglied und einem Hauptventilsitz 16" gebildet wird. Der Hauptventilteller 16' befindet sich am oberen Ende des Thermostateinsatzes 18 und verschließt durch Anlage an dem Hauptventilsitz 16" gemäß der Darstellung in Fig. 1 den Rücklaufanschluss 15.

Zur Bildung des Kurzschlussventils 19 ist am Thermostateinsatz 18 ein Ventilschließglied 19' vorgesehen, dessen Durchmesser im Querschnitt der Kurzschlussöffnung 12 angepasst ist. Es ist somit möglich, dass bei entsprechender Bewegung das Ventilschließglied 18' in die Kurzschlussöffnung 12 eintaucht und auf diese Weise den Durchgang von dem Kühlmittelkanal 4 zu der Ventilkammer 13 verschließt. Ein stirnseitig an dem Arbeitselement 20 befindlicher Kolben ist in ein endseitiges Sackloch am Thermostateinsatz 18 gesteckt. Auf diese Weise folgen das Ventilschließglied 19' und der Hauptventilteller 16' der axialen Bewegung des Arbeitselementes 20.

In dem Arbeitselement 20 befindet sich ein Heizelement 21, das über eine Stromzuführung 22 mit Kontakten 23 verbunden ist, die in einem Stecker 24 angeordnet sind. In einer Wand 7* des Gehäuses 7 ist nahe des Flansches 8 ein Temperatursensor 25 angeordnet, der mit seinem vorderen Ende aus der Wand 7* hervorsteht und in den vom Kühlmittel durchströmten Bereich zwischen dem Kühlmittelkanal 4 und der Kurzschlussöffnung 12 ragt. Auf diese Weise ist sichergestellt, dass der Temperatursensor 25 unabhängig von der Stellung des Thermostatventils 2 stets vom Kühlmittelstrom beaufschlagt wird und die aktuelle Temperatur erfasst. Der Temperatursensor 25 besteht aus einer Sensorpille 26 in einem Metallrohr 27, und zwar an dessen vorderem Ende, mit dem die Sensorpille 26 in guter wärmeleitender Verbindung steht. Der Temperatursensor 25 ist mittels Verbindungsleitungen 28 an den Kontakten 23 im Stecker 24 angeschlossen. Die Verbindungsleitungen 28 sind ebenso wie die Stromzuführung 22 in das Kunststoffmaterial des Gehäuses 7 eingegossen. Die Temperatursensoren für solche Anwendungen sind in der Regel metallische Widerstände bzw. Halbleiterelemente mit temperaturabhängigem Widerstand wie Platinelemente, PTC-Elemente oder NTC-Elemente.

In dem in Fig. 1 dargestellten Zustand, in dem der Rücklaufanschluss 15 durch den Hauptventilteller 16' verschlossen ist, fließt das Kühlmittel ausschließlich durch die Kurzschlussöffnung 12 in die Ventilkammer 13 und von dort durch einen Motorzulaufanschluss 29, an den eine in der Zeichnung nicht dargestellte Kühlmittelpumpe angeschlossen ist. Bei Erwärmung des Kühlmittels dehnt sich das Medium in dem Arbeitselement 20 aus und verschiebt den Thermostateinsatz 18 nach unten, so dass der Hauptventilteller 16' von dem Hauptventilsitz 16" abgehoben wird. In dieser Zwischenstellung des Thermostatventils 2 sind sowohl das Hauptventil 16 als auch das Kurzschlussventil 19 teilweise geöffnet.

Wenn das Ventilschließglied 19' des Kurzschlussventils 19 so weit in die Kurzschlussöffnung 12 eingetaucht ist, dass es die radialen Öffnungen 14 und somit auch die Kurzschlussöffnung 12 verschließt, strömt das Kühlmittel ausschließlich durch die Kühlmittelbohrung 6 zu einem Kühlmittelkühler und von dort zurück durch den Rücklaufanschluss 15 und das geöffnete Hauptventil 16. Da in dieser Stellung des Thermostateinsatzes 18 der Temperatursensor 25 sich weiter in der Kühlmittelströmung befindet, wird in jeder Lage bzw. Stellung des Thermostateinsatzes 18 schnell und exakt die Kühlmittelaustrittstemperatur der Brennkraftmaschine gemessen.

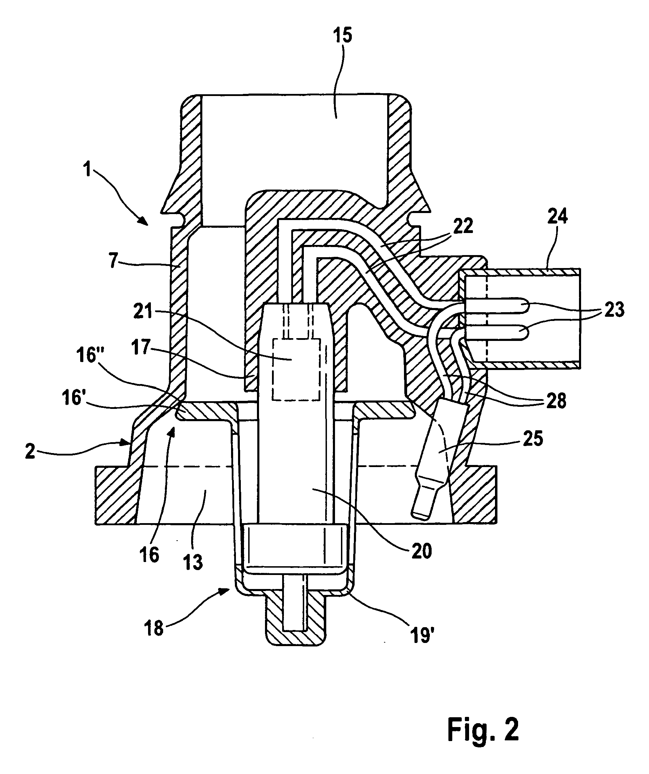

Die Fig. 2 zeigt eine Ausführungsvariante des Thermostatventils 2 mit geändertem Rücklaufanschluss 15 und einer anderen Position des Temperatursensors 25, nämlich in der Nähe des Hauptventils 16. Allerdings ist das Gehäuse anders ausgeführt, nämlich zweiteilig, wobei lediglich das obere Gehäuseteil dargestellt ist. Im Übrigen stimmen die Bezugszeichen für gleiche Teile mit denjenigen der Fig. 1 überein, so dass auf die Beschreibung zu Fig. 1 verwiesen wird.

Bei den Ausführungsbeispielen der Fig. 1 und 2 sind der Stecker 24, der Temperatursensor 25, das Arbeitselement 20, die Stromzuführung 22 und die Verbindungsleitungen 28 zu einer Baugruppe zusammengefasst. Die Baugruppe ist bezüglich der elektrischen Anschlüsse vollständig und kann daher vor Integration in das Gehäuse 7 auf ordnungsgemäße Funktion geprüft werden. Zur Herstellung des Gehäuses 7 wird die Baugruppe in die Spritzgussform des Gehäuses eingelegt und nach Schließen der Form das Kunststoffmaterial eingespritzt. Dabei umschließt das Kunststoffmaterial im Bereich des Stutzens 17 das Arbeitselement 20, im Bereich der Wand 7* den Temperatursensor 25, und bettet die Stromzuführung 22 und die Verbindungsleitungen 28 in das Gehäuse 7 ein. Der Stecker 24 ist ebenfalls an dem Gehäuse 7 fest verbunden.

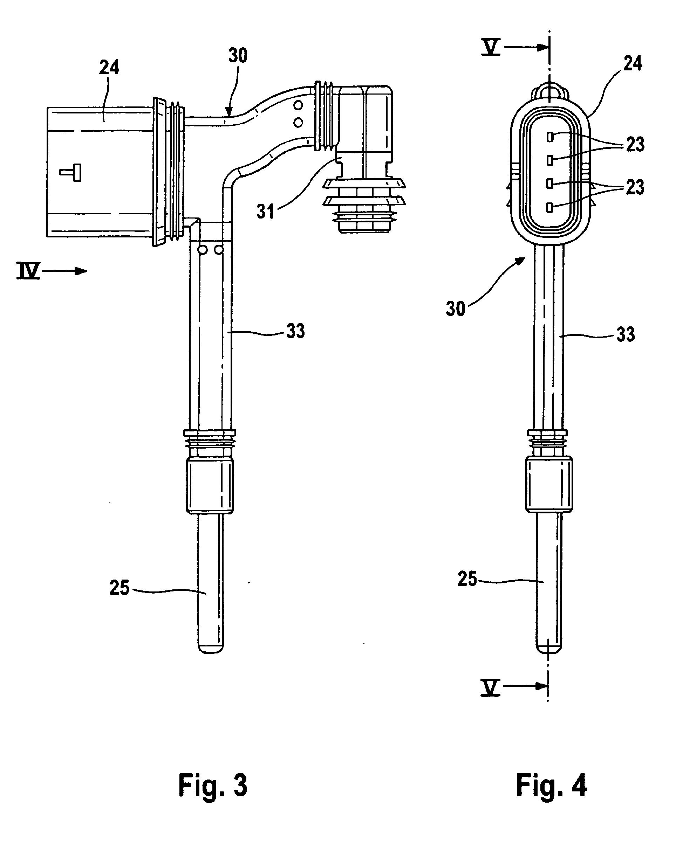

In Fig. 3 ist eine Baugruppe als formstabiles Bauteil 30 gezeigt. Die Baugruppe umfasst den Stecker 24, den Temperatursensor 25 sowie einen weiteren Stecker 31 und die aus dieser Ansicht nicht erkennbaren Verbindungsleitungen und die Stromzuführung. Der Temperatursensor 25 ist in einem stabförmigen Teil 33 eines Kunststoffkörpers 35 gehalten, der einstückig mit den Steckern 24 und 31 ausgeführt ist. Der Temperatursensor 25 ragt um eine bestimmte Länge aus dem stabförmigen Teil 33 hervor.

Die Fig. 4 zeigt eine Ansicht in Richtung des Pfeils IV in Fig. 3, wobei daraus ersichtlich ist, dass in dem Stecker 24 vier übereinander liegende Kontakte 23 vorgesehen sind. Das Bauteil 30 ist sehr flach gestaltet und eignet sich daher gut als Einlegeteil bei der Herstellung des aus Kunststoff gefertigten Gehäuses 7 in Fig. 1.

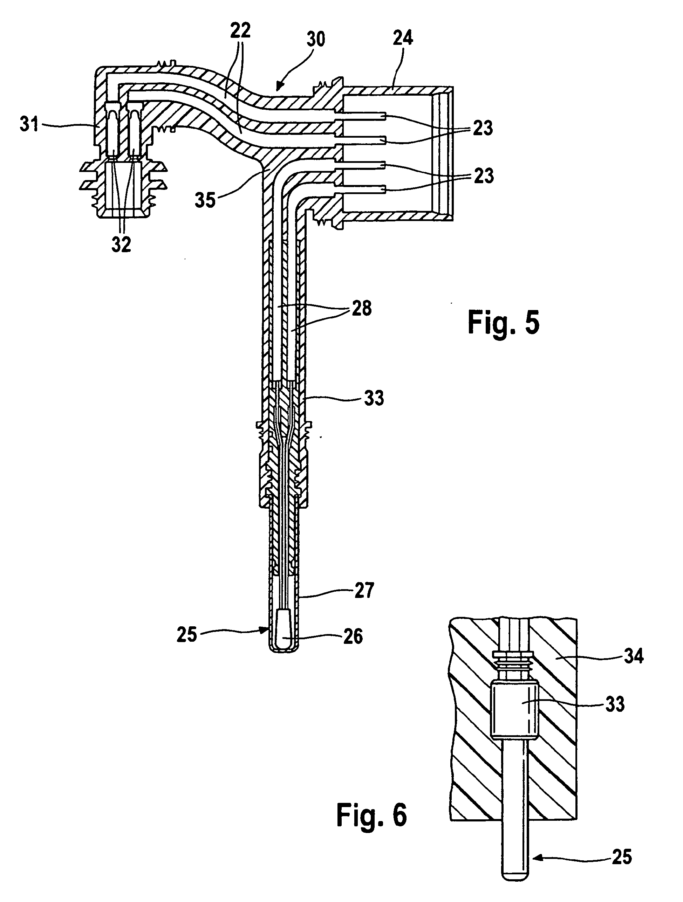

Die Fig. 5 zeigt einen Schnitt entlang der Linie V-V in Fig. 4. Daraus ist ersichtlich, dass der Temperatursensor 25 aus einem Metallrohr 27 und darin angeordneter Sensorpille 26 besteht, wobei die Sensorpille 26 an dem vorderen stirnseitigen Ende des Metallrohres anliegt und das andere Ende des Metallrohres 27 in dem stabförmigen Teil 33 gehalten ist. In dem Stecker 24 sind die vier Kontakte 23 angeordnet, wobei jeder Leiter der Stromzuführung 22 und jede Verbindungsleitung 28 an einem separaten Kontakt 23 angeschlossen sind. Im weiteren Stecker 31 sind zwei Kontakte 32 vorgesehen, um entsprechende Kontakte des beheizbaren Arbeitselementes aufzunehmen.

In Fig. 6 ist ein Abschnitt des stabförmigen Teils 33 mit dem Temperatursensor 25 gezeigt, und zwar in der in einem Gehäuse 34 integrierten Form, wobei es sich bei dem Gehäuse 34 ebenfalls um ein aus Kunststoff bestehendes Gehäuse eines Thermostatventils handelt. Das Kunststoffmaterial des Gehäuses 34 umschließt den stabförmigen Teil 33 und auch das Metallrohr 27 des Temperatursensors 25. Mit seinem vorderen Ende, in dem sich die aus Fig. 5 ersichtliche Sensorpille 26 befindet, ragt das Metallrohr 27 und somit auch der Temperatursensor 25 aus dem Gehäuse 34 hervor.

## Patentansprüche

1. Kühlmittelregler (1), insbesondere für einen Kühlmittelkreislauf einer Brennkraftmaschine, mit einem in einem Gehäuse (7) angeordneten Thermostatventil (2), das mindestens ein in Abhängigkeit eines Temperaturwertes von einem Arbeitselement (20) beaufschlagbares Ventilschließglied (16', 19'), einen Temperatursensor (25) sowie ein Heizelement (21) für das Arbeitselement (20) umfasst, wobei an dem Gehäuse (7) mindestens ein Stecker (24) und eine Stromzuführung (22) für das Heizelement vorgesehen sind,
**dadurch gekennzeichnet, dass** von dem Stecker (24) aus Verbindungsleitungen (28) zu dem Temperatursensor (25) führen und dass der Stecker (24), der Temperatursensor (25), die Verbindungsleitungen (28) und die Stromzuführung (22) für das Heizelement (21) als vorgefertigte Baugruppe ausgeführt sind und diese Baugruppe in das Gehäuse (7) integriert ist.

2. Kühlmittelregler nach Anspruch 1,
**dadurch gekennzeichnet, dass** der Temperatursensor (25) eine Sensorpille (26) und ein Metallrohr (27) umfasst, wobei die Sensorpille (26) vorzugsweise am Ende des Metallrohres (27) in diesem wärmeleitend angeordnet ist.

3. Kühlmittelregler nach Anspruch 1 oder 2,
**dadurch gekennzeichnet, dass** der Temperatursensor (25) an einer Gehäusewand (7*) gehalten ist und aus dieser in einen Kühlmittelkanal ragt.

4. Kühlmittelregler nach einem der Ansprüche 1 bis 3,
**dadurch gekennzeichnet, dass** die Baugruppe auch das Heizelement (21) umfasst, das mit der Stromzuführung (22) verbunden ist.

5. Kühlmittelregler nach einem der Ansprüche 1 bis 3,
**dadurch gekennzeichnet, dass** an einem Ende der Stromzuführung (22) ein weiterer Stecker (31) angeordnet ist, der ebenfalls Bestandteil der Baugruppe ist.

6. Kühlmittelregler nach einem der Ansprüche 1 bis 5,
**dadurch gekennzeichnet, dass** die Verbindungsleitungen (28) und die Stromzuführung (22) der Baugruppe aus flexiblen Drähten bestehen.

7. Kühlmittelregler nach einem der Ansprüche 1 bis 5,
**dadurch gekennzeichnet, dass** die Verbindungsleitungen (28) und Stromzuführungen (22) der Baugruppe aus starren Drähten, Stromschienen oder Bändern bestehen.

8. Kühlmittelregler nach einem der Ansprüche 1 bis 5,
**dadurch gekennzeichnet, dass** die Baugruppe als formstabiles Bauteil (30) aus Kunststoff ausgeführt ist, an dem der bzw. die Stecker (24, 31) angeformt sind.

9. Kühlmittelregler nach einem der Ansprüche 1 bis 8,
**dadurch gekennzeichnet, dass** die Verbindungsleitungen (28) und die Stromzuführung (22) an separaten Kontakten (23) im Stecker (24) angeschlossen sind.

10. Kühlmittelregler nach einem der Ansprüche 1 bis 8,
**dadurch gekennzeichnet, dass** die Verbindungsleitungen (28) und die Stromzuführung (22) an gemeinsamen Kontakten (23) im Stecker (24) angeschlossen sind.

11. Verfahren zur Herstellung eines Kühlmittelreglers (1) mit den Merkmalen des Anspruchs 1, wobei der Stecker (24) mit Stromzuführungen (22) für das Heizelement (21) zu einer Baugruppe zusammengefügt werden,
**dadurch gekennzeichnet, dass** zusätzlich Verbindungsleitungen (28) und der Temperatursensor (25) dieser Baugruppe hinzugefügt werden, dann diese Baugruppe in eine Spritzgussform für das Gehäuse (7) des Thermostatventils (2) eingelegt und dann das Gehäuse durch Einspritzung eines Kunststoffs in die Spritzgussform gefertigt wird.

## Claims

1. A coolant controller (1), in particular for a coolant circuit of an internal combustion engine, with a thermostat valve (2) arranged in a housing (7), which valve comprises at least one valve closing member (16', 19') which can be acted upon by an operating element (20) dependent on a temperature value, a temperature sensor (25) and a heating element (21) for the operating element (20), with at least one plug (24) and a power supply means (22) for the heating element being provided on the housing (7),
**characterised in that** from the plug (24) connecting lines (28) lead to the temperature sensor (25), and **in that** the plug (24), the temperature sensor (25), the connecting lines (28) and the power supply means (22) for the heating element (21) are formed as a prefabricated assembly and this assembly is integrated in the housing (7).

2. A coolant controller according to Claim 1,
**characterised in that** the temperature sensor (25) comprises a sensor button (26) and a metal tube (27), the sensor button (26) preferably being arranged at the end of the metal tube (27) in heat-conducting manner in said tube.

3. A coolant controller according to Claim 1 or 2,
**characterised in that** the temperature sensor (25) is held on a housing wall (7*) and projects therefrom into a coolant duct.

4. A coolant controller according to one of Claims 1 to 3,
**characterised in that** the assembly also comprises the heating element (21) which is connected to the power supply means (22).

5. A coolant controller according to one of Claims 1 to 3,
**characterised in that** a further plug (31) is arranged at one end of the power supply means (22), which plug is likewise a component of the assembly.

6. A coolant controller according to one of Claims 1 to 5,
**characterised in that** the connecting lines (28) and the power supply means (22) of the assembly consist of flexible wires.

7. A coolant controller according to one of Claims 1 to 5,
**characterised in that** the connecting lines (28) and power supply means (22) of the assembly consist of rigid wires, conductor bars or strips.

8. A coolant controller according to one of Claims 1 to 5,
**characterised in that** the assembly is designed as a dimensionally stable component (30) made of plastics material onto which the plug(s) (24, 31) are formed.

9. A coolant controller according to one of Claims 1 to 8,
**characterised in that** the connecting lines (28) and the power supply means (22) are connected to separate contacts (23) in the plug (24).

10. A coolant controller according to one of Claims 1 to 8,
**characterised in that** the connecting lines (28) and the power supply means (22) are connected to common contacts (23) in the plug (24).

11. A method for the production of a coolant controller (1) having the features of Claim 1, the plug (24) being assembled to form an assembly with power supply means (22) for the heating element (21),
**characterised in that** additionally connecting lines (28) and the temperature sensor (25) are added to this assembly, then this assembly is placed in an injection mould for the housing (7) of the thermostat valve (2) and then the housing is manufactured by injecting a plastics material into the injection mould.

## Revendications

1. Régulateur d'agent de refroidissement (1), en particulier pour un circuit d'agent de refroidissement d'un moteur à combustion interne, avec une soupape à thermostat (2) qui est disposée dans une enveloppe (7) et qui comprend au moins un organe de fermeture de soupape (16', 19') apte à être contraint par un élément de travail (20) en fonction d'une valeur de température, un capteur de température (25) et un élément chauffant (21) pour l'élément de travail (20), étant précisé qu'il est prévu sur l'enveloppe (7) au moins un raccord (24) et une amenée de courant (22) pour l'élément chauffant,
**caractérisé en ce qu'**à partir du raccord (24), des lignes de liaison (28) mènent au capteur de température (25) et **en ce que** le raccord (24), le capteur de température (25), les lignes de liaison (28) et l'amenée de courant (22) pour l'élément chauffant (21) sont conçus comme un ensemble préfabriqué et cet ensemble est intégré dans l'enveloppe (7).

2. Régulateur d'agent de refroidissement selon la revendication 1,
**caractérisé en ce que** le capteur de température (25) comprend une pastille de capteur (26) et un tube métallique (27), la pastille de capteur (26) étant de préférence disposée à l'extrémité du tube métallique (27) en transmettant la chaleur dans celui-ci.

3. Régulateur d'agent de refroidissement selon la revendication 1 ou 2,
**caractérisé en ce que** le capteur de température (25) est fixé à une paroi d'enveloppe (7*) et dépasse de celle-ci pour entrer dans un conduit d'agent de refroidissement.

4. Régulateur d'agent de refroidissement selon l'une des revendications 1 à 3,
**caractérisé en ce que** ledit ensemble comprend également l'élément chauffant (21), qui est relié à l'amenée de courant (22).

5. Régulateur d'agent de refroidissement selon l'une des revendications 1 à 3,
**caractérisé en ce qu'**il est prévu à une extrémité de l'amenée de courant (22) un autre raccord (31) qui est fait partie, lui aussi, dudit ensemble.

6. Régulateur d'agent de refroidissement selon l'une des revendications 1 à 5,
**caractérisé en ce que** les lignes de liaison (28) et l'amenée de courant (22) dudit ensemble se composent de fils flexibles.

7. Régulateur d'agent de refroidissement selon l'une des revendications 1 à 5,
**caractérisé en ce que** les lignes de liaison (28) et les amenées de courant (22) dudit ensemble se composent de fils rigides, de barres collectrices ou de bandes.

8. Régulateur d'agent de refroidissement selon l'une des revendications 1 à 5,
**caractérisé en ce que** ledit ensemble est conçu comme un composant indéformable (30) en matière plastique sur lequel le ou les raccords (24, 31) sont rapportés.

9. Régulateur d'agent de refroidissement selon l'une des revendications 1 à 8,
**caractérisé en ce que** les lignes de liaison (28) et l'amenée de courant (22) sont raccordées à des contacts (23) séparés, dans le raccord (24).

10. Régulateur d'agent de refroidissement selon l'une des revendications 1 à 8,
**caractérisé en ce que** les lignes de liaison (28) et l'amenée de courant (22) sont raccordées à des contacts (23) communs, dans le raccord (24).

11. Procédé pour fabriquer un régulateur d'agent de refroidissement (1) avec les
caractéristiques de la revendication 1, étant précisé que le raccord (24) et des amenées de courant (22) pour l'élément chauffant (21) sont assemblés pour former un ensemble, **caractérisé en ce qu'**en supplément, des lignes de liaison (28) et le capteur de température (25) sont ajoutés à cet ensemble, puis ledit ensemble est placé dans un moule à injection pour l'enveloppe (7) de la soupape à thermostat (2), et l'enveloppe est ensuite fabriquée par injection d'une matière plastique dans le moule à injection.
